# EUROPEAN PATENT SPECIFICATION

(11) **EP 4 201 995 B1**
(45) Date of publication and mention of the grant of the patent: **23.10.2024**
(21) Application number: 22215743.0
(22) Date of filing: 22.12.2022
(51) Int. Cl.: C08L 67/02, C08G 63/183

(54) **THERMOPLASTIC RESIN COMPOSITION AND ARTICLE PRODUCED THEREFROM**
THERMOPLASTISCHE HARZZUSAMMENSETZUNG UND DARAUS HERGESTELLTER ARTIKEL
COMPOSITION DE RÉSINE THERMOPLASTIQUE ET ARTICLE PRODUIT À PARTIR DE CELLE-CI

(30) Priority: 23.12.2021 KR 20210186310
(43) Date of publication of application: 28.06.2023
(73) Proprietor: Lotte Chemical Corporation, Seoul, 05551 (KR)
(72) Inventor: PARK, Chan Moo, 16073 Gyeonggi-do (KR); KANG, Mi Sung, 16073 Gyeonggi-do (KR); KIM, Yang Il, 16073 Gyeonggi-do (KR); SEO, Yeong Deuk, 16073 Gyeonggi-do (KR); LEE, Min Soo, 16073 Gyeonggi-do (KR); LEE, Sang Hwa, 16073 Gyeonggi-do (KR); LEE, Bong Jae, 16073 Gyeonggi-do (KR)
(74) Representative: Germain Maureau

(56) References cited:
- WO-A1-2021/013115
- JP-A- H1 149 937
- KR-A- 20210 050 766

## Description

### Field of the Invention

The present invention relates to a thermoplastic resin composition and an article produced therefrom. More particularly, the present invention relates to a thermoplastic resin composition having good properties in terms of glass adhesion, metal bonding, fluidity, impact resistance, and balance therebetween, and an article produced therefrom.

### Description of the Related Art

As engineering plastics, a polyester resin and a blend of a polyester resin and a polycarbonate resin exhibit useful properties and are applied to various fields including interior and exterior materials for electric/electronic products. However, the polyester resin has problems of low crystallization rate, low mechanical strength, and low impact strength.

Thus, various attempts have been made to improve mechanical properties including impact resistance and rigidity of the polyester resin by adding additives such as inorganic fillers to the polyester resin. For example, polybutylene terephthalate (PBT) resins reinforced by inorganic fillers, such as glass fiber and the like, are frequently used as materials for automobile components and the like. However, since such materials have a limitation in improvement in impact resistance, rigidity, and the like, there is a problem of deterioration in glass adhesion, metal bonding, and the like.

Therefore, there is a need for development of a thermoplastic resin composition having good properties in terms of glass adhesion, metal bonding, fluidity, impact resistance, and balance therebetween.

The background technique of the present invention is disclosed in Korean Patent Registration No. 10-0709878 and KR 2021 0050766 A.

### Summary of the Invention

It is one aspect of the present invention to provide a thermoplastic resin composition having good properties in terms of glass adhesion, metal bonding, fluidity, impact resistance, and balance therebetween, and an article produced therefrom. The present invention relates to a thermoplastic composition, an article made from the composition and a composite material as disclosed in the appended claims.

### Detailed Description of the Invention

Hereinafter, embodiments of the present invention will be described in detail.

A thermoplastic resin composition according to the present invention includes: (A) a polybutylene terephthalate resin; (B) a polycarbonate resin; (C) glass fiber; and (D) talc.

As used herein to represent a specific numerical range, "a to b" means "≥ a and ≤ b".

### (A) Polybutylene terephthalate resin

The polybutylene terephthalate (PBT) resin according to the present invention serves to improve properties of the thermoplastic resin composition in terms of glass adhesion, metal bonding, fluidity, impact resistance, and balance therebetween together with the polycarbonate resin and a specific ratio of glass fiber to talc, and may be a polybutylene terephthalate resin used in typical thermoplastic resin compositions. For example, the polybutylene terephthalate resin may be prepared through polycondensation of a dicarboxylic component, such as terephthalic acid (TPA) and the like, and a diol component, such as 1,3-butane diol, 1,4-butane diol, and the like.

In some embodiments, the polybutylene terephthalate resin may have an inherent viscosity [η] of 0.5 dl/g to 1.5 dl/g, for example, 0.7 dl/g to 1.3 dl/g, as measured in accordance with ASTM D2857. In some embodiments, the polybutylene terephthalate resin may have an inherent viscosity [η] of 0.5, 0.6, 0.7, 0.8, 0.9, 1.0, 1.1, 1.2, 1.3, 1.4, or 1.5. Further, according to some embodiments, the polybutylene terephthalate resin may have an inherent viscosity [η] of from any of the foregoing values to any other of the foregoing values. Within this range, the thermoplastic resin composition can exhibit good properties in terms of mechanical properties, metal bonding, fluidity, and the like.

### (B) Polycarbonate resin

The polycarbonate resin according to the present invention serves to improve the properties of the thermoplastic resin composition in terms of glass adhesion, metal bonding, fluidity, impact resistance, and balance therebetween together with the polybutylene terephthalate resin and a specific ratio of glass fiber to talc and may be a polycarbonate resin used in typical thermoplastic resin compositions. For example, the polycarbonate resin may be an aromatic polycarbonate resin prepared by reacting diphenols (aromatic diol compounds) with a precursor, such as phosgene, halogen formate, or carbonate diester.

In some embodiments, the diphenols may include, for example, 4,4'-biphenol, 2,2-bis(4-hydroxyphenyl)-propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis-(3,5-dichloro-4-hydroxyphenyl)propane, 2,2-bis(3-methyl-4-hydroxyphenyl)propane, and 2,2-bis(3,5-dimethyl-4-hydroxyphenyl)propane, without being limited thereto. For example, the diphenols may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the polycarbonate resin may be a branched polycarbonate resin. For example, the polycarbonate resin may be a polycarbonate resin prepared by adding a tri- or higher polyfunctional compound, specifically, a tri- or higher valent phenol group-containing compound, in an amount of 0.05 mol% to 2 mol% based on the total number of moles of the diphenols used in polymerization.

In some embodiments, the polycarbonate resin may be a homopolycarbonate resin, a copolycarbonate resin, or a blend thereof. The polycarbonate resin may be partly or completely replaced by an aromatic polyester-carbonate resin prepared by polymerization in the presence of an ester precursor, for example, a bifunctional carboxylic acid.

In some embodiments, the polycarbonate resin may have a weight average molecular weight (Mw) of 10,000 g/mol to 50,000 g/mol, for example, 20,000 g/mol to 40,000 g/mol, as measured by gel permeation chromatography (GPC). Within this range, the thermoplastic resin composition can have good impact resistance, fluidity (processability), and the like.

In some embodiments, the polycarbonate resin may be present in an amount of 3 parts by weight to 33 parts by weight, for example, 5 parts by weight to 30 parts by weight, relative to 100 parts by weight of the polybutylene terephthalate resin. In some embodiments, the thermoplastic resin composition may include the polycarbonate resin in an amount of 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, or 33 parts by weight, relative to 100 parts by weight of the polybutylene terephthalate resin. Further, according to some embodiments, the polycarbonate resin can be present in an amount of from any of the foregoing amounts to any other of the foregoing amounts. If the content of the polycarbonate resin is less than 3 parts by weight relative to 100 parts by weight of the polybutylene terephthalate resin, the resin composition can suffer from deterioration in glass adhesion, fluidity, and the like, and if the content of the polycarbonate resin exceeds 33 parts by weight, the resin composition can suffer from deterioration in metal bonding and the like.

### (C) Glass fiber

According to the present invention, the glass fiber serves to improve the properties of the thermoplastic resin composition in terms of glass adhesion, metal bonding, fluidity, impact resistance, and balance therebetween together with the polybutylene terephthalate resin, the polycarbonate resin and a specific content of talc, and may be glass fiber used in typical thermoplastic resin compositions.

In some embodiments, the glass fiber may have a fibrous shape and may have various cross-sectional shapes, such as circular, elliptical, and rectangular shapes. For example, fibrous glass fiber having circular and/or rectangular cross-sectional shapes may be preferred in terms of mechanical properties.

In some embodiments, the glass fiber having a circular cross-section may have a cross-sectional diameter of 5 µm to 20 µm and a pre-processing length of 2 mm to 20 mm, as measured using a scanning electron microscope (SEM), and the glass fiber having a rectangular cross-section may have an aspect ratio (a ratio of a long-side length to a short-side length on a cross-section) of 1.5 to 10, a short-side length of 2 µm to 10 µm, and a pre-processing length of 2 mm to 20 mm, as measured using the scanning electron microscope. Within this range, the thermoplastic resin composition can have good rigidity, processability, and the like.

In some embodiments, the glass fiber may be subjected to surface treatment with a typical surface treatment agent. The surface treatment agent may include a silane compound, a urethane compound, and an epoxy compound, without being limited thereto.

In some embodiments, the glass fiber may be present in an amount of 60 parts by weight to 120 parts by weight, for example, 70 parts by weight to 110 parts by weight, relative to 100 parts by weight of the polybutylene terephthalate resin. In some embodiments, the thermoplastic resin composition may include the glass fiber in an amount of 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, or 120 parts by weight, relative to 100 parts by weight of the polybutylene terephthalate resin. Further, according to some embodiments, the glass fiber can be present in an amount of from any of the foregoing amounts to any other of the foregoing amounts. If the content of the glass fiber is less than 60 parts by weight relative to 100 parts by weight of the polybutylene terephthalate resin, the thermoplastic resin composition can suffer from deterioration in fluidity and the like, and if the content of the glass fiber exceeds 120 parts by weight, the thermoplastic resin composition can suffer from deterioration in metal bonding, impact resistance, and the like.

### (D) Talc

According to the present invention, the talc serves to improve the properties of the thermoplastic resin composition in terms of glass adhesion, metal bonding, fluidity, impact resistance, and balance therebetween together with the polybutylene terephthalate resin, the polycarbonate resin and a specific content of the glass fiber, and may have an average particle diameter of 3 µm to 6 µm.

In some embodiments, the talc is flake type inorganic fillers and may have an average particle diameter of 3 µm to 6 µm, for example, 3.5 µm to 5 µm, as measured using a particle analyzer (Malvern Mastersizer 3000). If the average particle diameter of the talc is less than 3 µm, the thermoplastic resin composition can suffer from deterioration in metal bonding and the like, and if the average particle diameter of the talc exceeds 6 µm, the thermoplastic resin composition can suffer from deterioration in glass adhesion, fluidity, and the like.

In some embodiments, the talc may be present in an amount of 0.01 parts by weight to 1.6 parts by weight, for example, 0.02 parts by weight to 1.5 parts by weight, relative to 100 parts by weight of the polybutylene terephthalate resin. In some embodiments, the thermoplastic resin composition may include the talc in an amount of 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1.0, 1.1, 1.2, 1.3, 1.4, 1.5, or 1.6 parts by weight, relative to 100 parts by weight of the polybutylene terephthalate resin. Further, according to some embodiments, the talc can be present in an amount of from any of the foregoing amounts to any other of the foregoing amounts. If the content of the talc is less than 0.01 parts by weight relative to 100 parts by weight of the polybutylene terephthalate resin, the thermoplastic resin composition can suffer from deterioration in fluidity and the like, and if the content of the talc exceeds 1.6 parts by weight, the thermoplastic resin composition can suffer from deterioration in metal bonding, fluidity, tensile strength, and the like.

In some embodiments, the glass fiber and the talc may be present in a weight ratio (C:D) of 50:1 to 5,000:1, for example, 59:1 to 4,500:1. If the weight ratio of the glass fiber to the talc is less than 50:1, the thermoplastic resin composition can suffer from deterioration in fluidity, impact resistance, and the like, and if the weight ratio of the glass fiber to the talc exceeds 5,000:1, the thermoplastic resin composition can suffer from deterioration in metal bonding and the like.

The thermoplastic resin composition according to one embodiment of the present invention may further include additives used in typical thermoplastic resin compositions. Examples of the additives may include impact modifiers, flame retardants, antioxidants, anti-dripping agents, lubricants, release agents, nucleating agents, antistatic agents, stabilizers, pigments, dyes, and mixtures thereof, without being limited thereto. In the thermoplastic resin composition, the additives may be present in an amount of 0.001 to 40 parts by weight, for example, 0.1 to 10 parts by weight, relative to 100 parts by weight of the polybutylene terephthalate resin. In some embodiments, the thermoplastic resin composition may include the additive(s) in an amount of 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by weight, relative to 100 parts by weight of the polycarbonate resin. Further, according to some embodiments, the additive(s) can be present in an amount of from any of the foregoing amounts to any other of the foregoing amounts.

The thermoplastic resin composition according to one embodiment of the present invention may be prepared in pellet form by mixing the aforementioned components, followed by melt extrusion in a typical twin-screw extruder at 240°C to 300°C, for example, 260°C to 290°C.

In some embodiments, the thermoplastic resin composition may have an average potential energy of 700 mJ to 870 mJ, for example, 730 mJ to 870 mJ, as calculated by averaging potential energy values measured upon detachment of five specimens each having a size of 50 mm × 50 mm × 4 mm from a glass substrate having a size of 25 mm × 25 mm × 3 mm by dropping a dart having a weight of 50 g to 900 g onto the specimens from a height of 5 cm to 100 cm according to the DuPont drop test method, in which a urethane-based bonding agent (H.B. Fuller Co., Ltd., EH9777BS) is applied to a size of 15 mm × 15 mm × 1 mm on each of the specimens at 110°C and the glass substrate is bonded to the bonding agent, followed by curing under conditions of 25°C and 50% relative humidity (RH) for 72 hours.

In some embodiments, the thermoplastic resin composition may have a metal bonding strength of 35 MPa to 50 MPa, for example, 35 MPa to 45 MPa, as measured on an aluminum-based metal specimen in accordance with ISO 19095.

In some embodiments, the thermoplastic resin composition may have a melt-flow Index (MI) of 40 to 80 g/10 min, for example, 50 to 80 g/10 min, as measured under conditions of 280°C and 49.03 N (5 kgf) in accordance with ASTM D1238.

In some embodiments, the thermoplastic resin composition may have a notched Izod impact strength of 49.03 N.m/m (9 kgf.cm/cm) to 196.14 N.m/m (10 kgf.cm/cm), for example, 98.07 N.m/m (10 kgf.cm/cm) to 147.11 N.m/m (15 kgf.cm/cm), as measured on a 3.2 mm (1/8") thick specimen in accordance with ASTM D256.

An article according to the present invention is formed of the thermoplastic resin composition set forth above. The thermoplastic resin composition may be prepared in pellet form. The prepared pellets may be produced into various articles (products) by various molding methods, such as injection molding, extrusion, vacuum molding, casting, and the like. These molding methods are well known to those skilled in the art. The articles have good properties in terms of glass adhesion, metal bonding, fluidity, impact resistance, and balance therebetween, and are useful as interior/exterior materials of electric/electronic products, interior/exterior materials of automobiles, interior/exterior materials of portable electronic communication devices, and the like.

A composite material according to the present invention may include a plastic member as the article; a metal member adjoining the plastic member; and a glass member bonded to the plastic member.

In some embodiments, the plastic member may directly adjoin the metal member without a bonding agent therebetween. For example, the plastic member and the metal member may be integrally formed with each other through insert-injection molding.

In some embodiments, the metal member may include at least one metal selected from among aluminum, titanium, iron, and zinc.

In some embodiments, the plastic member and the glass member may be bonded to each other through a bonding agent. For example, after processing a product (the plastic member and the metal member) manufactured by insert injection molding into a desired shape through a CNC process or the like, a glass member may be bonded thereto.

Next, the present invention will be described in more detail with reference to examples. However, it should be noted that these examples are provided for illustration only and should not be construed in any way as limiting the invention.

### EXAMPLE

Details of components used in Examples and Comparative Examples are as follows.

### (A) Polybutylene terephthalate resin

A polybutylene terephthalate resin (PBT, Manufacturer: Shinkong Synthetic Fibers, Product Name: Shinite K006, inherent viscosity [η]: about 1.3 dl/g) was used.

### (B) Polycarbonate resin

A bisphenol-A polycarbonate resin (PC, Manufacturer: Lotte Chemical Co., Ltd., Weight average molecular weight: about 25,000 g/mol) was used.

### (C) Glass fiber

Flat type glass fiber (Manufacturer: Nittobo, Product Name: CSG 3PA-820, short-side length: about 7 µm, Aspect ratio on cross-section: about 4, Pre-processing length: about 3 mm) was used.

### (D) Talc

(D1) Talc (Manufacturer: Hayashi, Product Name: UPNHS-T 0.5, Average particle diameter: 4.75 µm) was used.
(D2) Talc (Manufacturer: KOCH, Product Name: KHP-255, Average particle diameter: 4.85 µm) was used.
(D3) Talc (Manufacturer: YingKou Dahai, Product Name: DH-400, Average particle diameter: 4.95 µm) was used.
(D4) Talc (Manufacturer: Imerys minerals, Product Name: JETFINJE 3CA, Average particle diameter: 1.3 µm) was used.
(D5) Talc (Manufacturer: Imerys minerals, Product Name: Luzenac ST30, Average particle diameter: 7 µm) was used.

### Examples 1 to 10 and Comparative Examples 1 to 10

The aforementioned components were mixed in amounts as listed in Tables 1 to 4, followed by extrusion at 260°C, thereby preparing a thermoplastic resin composition in pellet form. Here, extrusion was performed using a twin-screw extruder (L/D: 44, Φ: 45 mm). The prepared pellets were dried at 80°C for 4 hours or more and then subjected to injection molding using a 6 oz. injection machine (molding temperature: about 270°C, mold temperature: about 120°C), thereby preparing specimens. The prepared specimens were evaluated as to the following properties. Results are shown in Tables 1, 2, 3 and 4.

### Property Evaluation

(1) Glass adhesive strength (unit: mJ): Average potential energy was calculated by averaging potential energy values measured upon detachment of five specimens each having a size of 50 mm × 50 mm × 4 mm from glass by dropping a dart having a weight of 50 g to 900 g onto the specimens from a height of 5 cm to 100 cm according to the DuPont drop test method, in which a urethane-based bonding agent (H.B. Fuller Co., Ltd., EH9777BS) was applied to a size of 15 mm × 15 mm × 1 mm on each of the specimens at 110°C and a glass substrate having a size of 25 mm × 25 mm × 3 mm (thickness) was bonded to the bonding agent, followed by curing at 25°C and at 50% RH for 72 hours. Potential energy (Ep) = Mass (dart weight upon detachment) × gravitational acceleration (9.8) × (dart height upon detachment))
(2) Metal bonding strength (unit: MPa): Bonding strength was measured after bonding an aluminum-based metal specimen to a specimen of the thermoplastic resin composition through insert-inj ection molding in accordance with ISO 19095. Here, the metal specimen was an aluminum-based metal specimen subjected to TRI surface treatment of Geo Nation Co., Ltd. to facilitate bonding between the metal specimen and the resin specimen. Each of the metal specimen and the resin specimen had a size of 1.2 cm × 4 cm × 0.3 cm and bonding strength therebetween was measured after bonding the specimens to have a bonding area of 1.2 cm × 0.3 cm.
(3) Melt-flow Index (MI, unit: g/10 min): Melt-flow Index was measured under conditions of 280°C and 49.03 N (5 kgf) in accordance with ASTM D1238.
(4) Notched Izod impact resistance (unit: kgf cm/cm): Notched Izod impact strength was measured on a 0.32 mm (1/8") thick specimen in accordance with ASTM D256 In the tables below, the Notched Izod impact resistance is expressed in kgf.cm/cm. The following conversion into SI units applies: 1 kgf.cm/cm = 9.81 N.m/m.

**Table 1**

| | Example | | | | |
|---|---|---|---|---|---|
| | 1 | 2 | 3 | 4 | 5 |
| (A) (parts by weight) | 100 | 100 | 100 | 100 | 100 |
| (B) (parts by weight) | 5 | 14.3 | 30 | 14.3 | 14.3 |
| (C) (parts by weight) | 89.8 | 89.8 | 89.8 | 70 | 110 |
| (D1) (parts by weight) | 0.8 | 0.8 | 0.8 | 0.8 | 0.8 |
| (D2) (parts by weight) | - | - | - | - | - |
| (D3) (parts by weight) | - | - | - | - | - |
| (D4) (parts by weight) | - | - | - | - | - |
| (D5) (parts by weight) | - | - | - | - | - |
| Glass adhesive strength (mJ) | 792 | 854 | 861 | 858 | 782 |
| Metal bonding strength (MPa) | 39.9 | 38.5 | 36.6 | 40.3 | 35.1 |
| Melt flow index (g/10 min) | 76 | 64 | 53 | 72 | 54 |
| Notched Izod impact strength (kgf·cm/cm) | 10.8 | 12.5 | 13.1 | 10.9 | 14.2 |

**Table 2**

| | Example | | | | |
|---|---|---|---|---|---|
| | 6 | 7 | 8 | 9 | 10 |
| (A) (parts by weight) | 100 | 100 | 100 | 100 | 100 |
| (B) (parts by weight) | 14.3 | 14.3 | 14.3 | 14.3 | 14.3 |
| (C) (parts by weight) | 89.8 | 89.8 | 89.8 | 89.8 | 89.8 |
| (D1) (parts by weight) | 0.02 | 0.45 | 1.5 | - | - |
| (D2) (parts by weight) | - | - | - | 0.8 | - |
| (D3) (parts by weight) | - | - | - | - | 0.8 |
| (D4) (parts by weight) | - | - | - | - | - |
| (D5) (parts by weight) | - | - | - | - | - |
| Glass adhesive strength (mJ) | 835 | 852 | 860 | 857 | 861 |
| Metal bonding strength (MPa) | 38.2 | 38.4 | 38.7 | 38.5 | 39.1 |
| Melt flow index (g/10 min) | 52 | 61 | 68 | 63 | 62 |
| Notched Izod impact strength (kgf·cm/cm) | 13.1 | 12.7 | 12.3 | 13.4 | 13.2 |

**Table 3**

| | Comparative Example | | | | |
|---|---|---|---|---|---|
| | 1 | 2 | 3 | 4 | 5 |
| (A) (parts by weight) | 100 | 100 | 100 | 100 | 100 |
| (B) (parts by weight) | 1 | 35 | 14.3 | 14.3 | 14.3 |
| (C) (parts by weight) | 89.8 | 89.8 | 50 | 130 | 89.8 |
| (D1) (parts by weight) | 0.8 | 0.8 | 0.8 | 0.8 | 0.005 |
| (D2) (parts by weight) | - | - | - | - | - |
| (D3) (parts by weight) | - | - | - | - | - |
| (D4) (parts by weight) | - | - | - | - | - |
| (D5) (parts by weight) | - | - | - | - | - |
| Glass adhesive strength (mJ) | 650 | 866 | 859 | 734 | 785 |
| Metal bonding strength (MPa) | 40.3 | 34.0 | 42.3 | 32.6 | 37.4 |
| Melt flow index (g/10min) | 82 | 43 | 91 | 41 | 35 |
| Notched Izod impact strength (kg·cm/cm) | 10.2 | 13.3 | 8.1 | 15.3 | 12.8 |

**Table 4**

| | Comparative Example | | | | |
|---|---|---|---|---|---|
| | 6 | 7 | 8 | 9 | 10 |
| (A) (parts by weight) | 100 | 100 | 100 | 100 | 100 |
| (B) (parts by weight) | 14.3 | 14.3 | 14.3 | 14.3 | 14.3 |
| (C) (parts by weight) | 89.8 | 89.8 | 89.8 | 70 | 110 |
| (D1) (parts by weight) | 1.7 | - | - | 1.5 | 0.02 |
| (D2) (parts by weight) | - | - | - | - | - |
| (D3) (parts by weight) | - | - | - | - | - |
| (D4) (parts by weight) | - | 0.8 | - | - | - |
| (D5) (parts by weight) | - | - | 0.8 | - | - |
| Glass adhesive strength (mJ) | 858 | 846 | 690 | 861 | 786 |
| Metal bonding strength (MPa) | 33.1 | 34.4 | 37.9 | 41.2 | 33.0 |
| Melt flow index (g/10 min) | 83 | 47 | 37 | 84 | 52 |
| Notched Izod impact strength (kgf·cm/cm) | 9.8 | 12.4 | 10.3 | 8.0 | 14.3 |

From the result, it could be seen that the thermoplastic resin composition according to the present invention exhibited good properties in terms of glass adhesion, metal bonding (metal bonding strength), fluidity (melt-flow index), impact resistance (notched Izod impact strength), and balance therebetween.

Conversely, it could be seen that the thermoplastic resin composition of Comparative Example 1 prepared using an insufficient amount of the polycarbonate resin exhibited deterioration in glass adhesion, fluidity, and the like; the thermoplastic resin composition of Comparative Example 2 prepared using an excess of the polycarbonate resin exhibited deterioration in metal bonding and the like; the thermoplastic resin composition of Comparative Example 3 prepared using an insufficient amount of the glass fiber exhibited deterioration in fluidity and the like; and the thermoplastic resin composition of Comparative Example 4 prepared using an excess of the glass fiber exhibited deterioration in metal bonding and the like. It could be seen that the thermoplastic resin composition of Comparative Example 5 prepared using an insufficient amount of the talc exhibited deterioration in fluidity and the like; and the thermoplastic resin composition of Comparative Example 6 prepared using an excess of the talc exhibited deterioration in metal bonding, fluidity, and the like. It could be seen that the thermoplastic resin composition of Comparative Example 7 prepared using talc (D4) instead of the talc according to the present invention exhibited deterioration in metal bonding, and the like; and the thermoplastic resin composition of Comparative Example 8 prepared using talc (D5) instead of the talc according to the present invention exhibited deterioration in glass adhesion, fluidity, and the like. Further, it could be seen that the thermoplastic resin composition (Comparative Example 9) including the glass fiber and the talc in a weight ratio (C:D1) (46.7:1) less than 50:1 exhibited deterioration in fluidity, impact resistance and the like, and the thermoplastic resin composition (Comparative Example 10) including the glass fiber and the talc in a weight ratio (5,500:1) exceeding 5,000:1 exhibited deterioration in metal bonding and the like.

Although some exemplary embodiments have been described herein, it should be understood by those skilled in the art that these embodiments are given by way of illustration only, and that various modifications, variations and alterations can be made without departing from the scope of the invention. Therefore, the embodiments should not be construed as limiting the technical spirit of the present invention, but should be construed as illustrating the present invention. The scope of the invention should be interpreted according to the following appended claims as covering all modifications or variations derived from the appended claims.

## Claims

1. A thermoplastic resin composition comprising:
100 parts by weight of a polybutylene terephthalate resin;
3 parts by weight to 33 parts by weight of a polycarbonate resin;
60 parts by weight to 120 parts by weight of glass fiber; and
0.01 parts by weight to 1.6 parts by weight of talc having an average particle diameter of 3 µm to 6 µm, determined using the method indicated in the description,
wherein the glass fiber and the talc are present in a weight ratio of 50:1 to 5,000:1.

2. The thermoplastic resin composition according to claim 1, wherein the polybutylene terephthalate resin has an inherent viscosity [η] of 0.5 dl/g to 1.5 dl/g, as measured in accordance with ASTM D2857.

3. The thermoplastic resin composition according to claim 1 or 2, wherein the polycarbonate resin has a weight average molecular weight of 10,000 g/mol to 50,000 g/mol, as measured by gel permeation chromatography (GPC).

4. The thermoplastic resin composition according to any one of claims 1 to 3, wherein the thermoplastic resin composition has an average potential energy of 700 mJ to 870 mJ, as calculated by averaging potential energy values measured upon detachment of five specimens each having a size of 50 mm × 50 mm × 4 mm from a glass substrate having a size of 25 mm × 25 mm × 3 mm by dropping a dart having a weight of 50 g to 900 g onto the specimens from a height of 5 cm to 100 cm according to the DuPont drop test method, in which a urethane-based bonding agent (H.B. Fuller Co., Ltd., EH9777BS) is applied to a size of 15 mm × 15 mm × 1 mm on each of the specimens at 110°C and the glass substrate is bonded to the bonding agent, followed by curing under conditions of 25°C and 50% RH for 72 hours.

5. The thermoplastic resin composition according to any one of claims 1 to 4, wherein the thermoplastic resin composition has a metal bonding strength of 35 MPa to 50 MPa, as measured on an aluminum-based metal specimen in accordance with ISO 19095.

6. The thermoplastic resin composition according to any one of claims 1 to 5, wherein the thermoplastic resin composition has a melt-flow index of 40 g/10 min to 80 g/10 min, as measured under conditions of 280°Cand 49.03 N (5 kgf) in accordance with ASTM D1238.

7. The thermoplastic resin composition according to any one of claims 1 to 6, wherein the thermoplastic resin composition has a notched Izod impact strength of 88.26 N.m/ m (9 kgf.cm/cm) to 196.14 N.m/m (20 kgf.cm/cm), as measured on a 3.2 mm (1/8") specimen in accordance with ASTM D256.

8. An article formed of the thermoplastic resin composition according to any one of claims 1 to 7.

9. A composite material comprising:
a plastic member as the article according to claim 8;
a metal member adjoining the plastic member; and
a glass member bonded to the plastic member.

## Patentansprüche

1. Thermoplastische Harzzusammensetzung, umfassend:
100 Gewichtsteile eines Polybutylenterephthalatharzes;
3 Gewichtsteile bis 33 Gewichtsteile eines Polycarbonatharzes;
60 Gewichtsteile bis 120 Gewichtsteile Glasfasern; und
0,01 Gewichtsteile bis 1,6 Gewichtsteile Talkum mit einem durchschnittlichen Teilchendurchmesser von 3 µm bis 6 µm, bestimmt nach dem in der Beschreibung angegebenen Verfahren,
wobei die Glasfaser und das Talkum in einem Gewichtsverhältnis von 50:1 bis 5.000:1 vorhanden sind.

2. Thermoplastische Harzzusammensetzung nach Anspruch 1, wobei das Polybutylenterephthalatharz eine inhärente Viskosität [η] von 0,5 dl/g bis 1,5 dl/g aufweist, gemessen gemäß ASTM D2857.

3. Thermoplastische Harzzusammensetzung nach Anspruch 1 oder 2, wobei das Polycarbonatharz ein gewichtsmittleres Molekulargewicht von 10.000 g/mol bis 50.000 g/mol aufweist, wie durch Gelpermeationschromatographie (GPC) gemessen.

4. Thermoplastische Harzzusammensetzung nach einem der Ansprüche 1 bis 3, wobei die thermoplastische Harzzusammensetzung eine durchschnittliche potentielle Energie von 700 mJ bis 870 mJ aufweist, berechnet durch Mittelung der potentiellen Energiewerte, die beim Ablösen von fünf Proben mit einer Größe von jeweils 50 mm × 50 mm × 4 mm von einem Glassubstrat mit einer Größe von 25 mm × 25 mm × 3 mm durch Fallenlassen eines Pfeils mit einem Gewicht von 50 g bis 900 g auf die Proben aus einer Höhe von 5 cm bis 100 cm nach dem DuPont Falltestverfahren gemessen wurden, bei dem ein auf Urethan basierendes Mittel (H. B. Fuller Co, Ltd., EH9777BS) in einer Größe von 15 mm × 15 mm × 1 mm auf jede der Proben bei 110 °C aufgetragen und das Glassubstrat mit dem Mittel verklebt wird, gefolgt von einer 72-stündigen Aushärtung unter Bedingungen von 25 °C und 50 % RH.

5. Thermoplastische Harzzusammensetzung nach einem der Ansprüche 1 bis 4, wobei die thermoplastische Harzzusammensetzung eine Metallbindungsfestigkeit von 35 MPa bis 50 MPa aufweist, gemessen an einer Metallprobe auf Aluminiumbasis gemäß ISO 19095.

6. Thermoplastische Harzzusammensetzung nach einem der Ansprüche 1 bis 5, wobei die thermoplastische Harzzusammensetzung einen Schmelzindex von 40 g/10 min bis 80 g/10 min aufweist, gemessen unter Bedingungen von 280 °C und 49,03 N (5 kgf) gemäß ASTM D1238.

7. Thermoplastische Harzzusammensetzung nach einem der Ansprüche 1 bis 6, wobei die thermoplastische Harzzusammensetzung eine Kerbschlagzähigkeit nach Izod von 88,26 N.m/m (9 kgf.cm/cm) bis 196,14 N.m/m (20 kgf.cm/cm) aufweist, gemessen an einer 3,2 mm (1/8 Zoll)-Probe gemäß ASTM D256.

8. Gegenstand aus der thermoplastischen Harzzusammensetzung nach einem der Ansprüche 1 bis 7.

9. Verbundmaterial, umfassend:
ein Kunststoffelement nach Anspruch 8;
ein Metallelement, das an das Kunststoffelement angrenzt; und
ein Glaselement, das mit dem Kunststoffelement verbunden ist.

## Revendications

1. Composition de résine thermoplastique comprenant :
100 parties en poids d'une résine de polybutylène téréphtalate ;
3 parties en poids à 33 parties en poids d'une résine de polycarbonate ;
60 parties en poids à 120 parties en poids de fibre de verre, et
0,01 partie en poids à 1,6 partie en poids de talc ayant un diamètre moyen de particules de 3 µm à 6 µm, déterminé à l'aide de la méthode indiquée dans la description,
dans laquelle la fibre de verre et le talc sont présents dans un rapport pondéral allant de 50:1 à 5000:1.

2. Composition de résine thermoplastique selon la revendication 1, dans laquelle la résine de polybutylène téréphtalate a une viscosité inhérente [η] allant de 0,5 dl/g à 1,5 dl/g, telle que mesurée conformément à la norme ASTM D2857.

3. Composition de résine thermoplastique selon la revendication 1 ou 2, dans laquelle la résine de polycarbonate a un poids moléculaire moyen en poids allant de 10000 g/mol à 50000 g/mol, tel que mesuré par chromatographie par perméation de gel (GPC).

4. Composition de résine thermoplastique selon l'une quelconque des revendications 1 à 3, dans laquelle la composition de résine thermoplastique a une énergie potentielle moyenne allant de 700 mJ à 870 mJ, telle que calculée en faisant la moyenne des valeurs d'énergie potentielle mesurées lors du détachement de cinq éprouvettes ayant chacune une taille de 50 mm × 50 mm × 4 mm d'un substrat en verre ayant une taille de 25 mm × 25 mm × 3 mm en laissant tomber une masse ayant un poids allant de 50 g à 900 g sur les éprouvettes d'une hauteur allant de 5 cm à 100 cm selon la méthode d'essai de choc de DuPont, dans laquelle un agent de liaison à base d'uréthane (H.B. Fuller Co., Ltd., EH9777BS) est appliqué à une taille allant de 15 mm × 15 mm × 1 mm sur chacune des éprouvettes à 110°C et le substrat en verre est lié à l'agent de liaison, suivi d'un durcissement dans des conditions de 25°C et 50% HR pendant 72 heures.

5. Composition de résine thermoplastique selon l'une quelconque des revendications 1 à 4, dans laquelle la composition de résine thermoplastique a une résistance de liaison métallique allant de 35 MPa à 50 MPa, telle que mesurée sur une éprouvette métallique à base d'aluminium conformément à la norme ISO 19095.

6. Composition de résine thermoplastique selon l'une quelconque des revendications 1 à 5, dans laquelle la composition de résine thermoplastique a un indice de fluidité allant de 40 g/10 min à 80 g/10 min, tel que mesuré dans des conditions de 280°C et 49,03 N (5 kgf) conformément à la norme ASTM D1238.

7. Composition de résine thermoplastique selon l'une quelconque des revendications 1 à 6, dans laquelle la composition de résine thermoplastique a une résistance aux chocs Izod sur éprouvette entaillée allant de 88,26 N.m/m (9 kgf.cm/cm) à 196,14 N.m/m (20 kgf.cm/cm), telle que mesurée sur une éprouvette de 3,2 mm (1/8") conformément à la norme ASTM D256.

8. Article formé de la composition de résine thermoplastique selon l'une quelconque des revendications 1 à 7.

9. Matériau composite comprenant :
un élément en plastique comme étant l'article selon la revendication 8 ;
un élément métallique adjacent à l'élément en plastique ; et
un élément en verre lié à l'élément en plastique.
